# EUROPÄISCHE PATENTSCHRIFT

(11) **EP 2 493 939 B1**
(45) Veröffentlichungstag und Bekanntmachung des Hinweises auf die Patenterteilung: **15.04.2015**
(21) Anmeldenummer: 10768248.6
(22) Anmeldetag: 25.10.2010
(51) Int. Cl.: C08F 12/00, C08L 25/00

(54) **VERFAHREN ZUR HERSTELLUNG VON ANHYDRIDHALTIGEN VINYLAROMAT-VINYLCYANID-COPOLYMEREN MIT VERRINGERTEM SCHMUTZPARTIKELGEHALT**
METHOD FOR PRODUCING ANHYDRIDE-CONTAINING VINYL AROMATIC-VINYL CYANIDE COPOLYMERS HAVING REDUCED DIRT PARTICLE CONTENT
PROCÉDÉS DE PRODUCTION DE COPOLYMÈRES VINYLAROMATE-CYANURE DE VINYLE CONTENANT DE L'ANHYDRIDE PRÉSENTANT UNE TENEUR RÉDUITE EN PARTICULES DE SALETÉ

(30) Priorität: 29.10.2009 EP 09174501
(43) Veröffentlichungstag der Anmeldung: 05.09.2012
(73) Patentinhaber: Styrolution Europe GmbH, 60325 Frankfurt am Main (DE)
(72) Erfinder: WEBER, Martin, 67487 Maikammer (DE); ITTEMANN, Peter, 68623 Lampertheim (DE); GOTTSCHALK, Axel, 67435 Neustadt (DE); NIEDERMAIER, Bernd, 67069 Ludwigshafen (DE); REINHARD, Birgit, 67117 Limburgerhof (DE); MECKELNBURG, Dirk, 67117 Limburgerhof (DE)
(74) Vertreter: Jacobi, Markus Alexander
(86) Internationale Anmeldenummer: PCT/EP2010/066012
(87) Internationale Veröffentlichungsnummer: WO 2011/051197

(56) Entgegenhaltungen:
- DE-A1- 19 953 955
- US-A- 4 167 543
- US-A1- 2008 300 333

## Beschreibung

Die vorliegende Erfindung betrifft Verfahren zur Herstellung von Copolymeren A) mit verringertem Schmutzpartikelgehalt, enthaltend

| | |
|---|---|
| 49,2 bis 93,2 Gew.-% | sich von einem oder mehreren vinylaromatischen Monomeren (Komponente A1)) ableitende Struktureinheiten, |
| 6 bis 50 Gew.-% | sich von einem oder mehreren Vinylcyaniden (Komponente A2)) ableitende Struktureinheiten, |
| 0,8 bis 7 Gew.-% | sich von einem oder mehreren Dicarbonsäureanhydriden (Komponente A3)) ableitende Struktureinheiten und |
| 0 bis 25 Gew.-% | sich von weiteren copolymerisierbaren und von A1), A2) und A3) verschiedenen Monomeren (Komponente A4)) ableitende Struktureinheiten, |

wobei die Gew.-% jeweils auf das Gesamtgewicht der sich von den Komponenten A1), A2), A3) und A4) ableitenden Struktureinheiten bezogen sind und zusammen 100 Gew.-% ergeben,
durch Masse- oder Lösungspolymerisation.

Weiterhin betrifft die vorliegende Erfindung die Copolymere A), thermoplastische Formmassen enthaltend die Copolymere A), die Verwendung der Copolymere A) und der thermoplastischen Formmassen sowie die aus den Copolymeren A) und den thermoplastischen Formmassen erhältlichen Formkörper, Folien, Fasern und Schäume.

Anhydridhaltige Vinylaromat-Vinylcyanid-Copolymere als solche, beispielsweise Styrol-Acrylnitril-Maleinsäureanhydrid-Copolymere, sowie Verfahren zu deren Herstellung sind bekannt.

So werden z.B. in DE 25 40 517 A1 u.a. Polymerisate auf Basis von Styrol, Acrylnitril und Maleinsäureanhydrid offenbart, welche durch eine spezielle kontinuierliche Massepolymerisation in mehreren Verfahrensstufen in Anwesenheit von Polymerisationsinitiatoren hergestellt werden. Die konkret offenbarten Polymerisate dieser Art weisen vergleichsweise hohe Anteile sich von Maleinsäureanhydrid ableitender Struktureinheiten auf; das mathematische Produkt aus den Gew.-% der sich von Acrylnitril und den Gew.-% der sich von Maleinsäureanhydrid ableitenden Struktureinheiten in den konkret offenbarten Polymerisaten dieser Art ist immer entweder kleiner als 20 Gew.-%² oder größer als 130 Gew.-%².

Gegenstand der EP 0 001 625 A1 sind u. a. spezielle Terpolymere aus Styrol, Acrylnitril und Maleinsäureanhydrid. Der Gehalt an Maleinsäureanhydrid in diesen Terpolymeren liegt zwischen 7,5 und 15 Gew.-%. Deren Herstellung erfolgt durch kontinuierliche Massepolymerisation in Anwesenheit eines in Radikale zerfallenden Initiators.

Die US 2,439,227 offenbart Styrol-Acrylnitril-Maleinsäureanhydrid-Terpolymere, die verbesserte mechanische Festigkeit und Wärmebeständigkeit aufweisen. Hergestellt werden diese Terpolymere aus Monomermischungen, die jeweils 7,5 bis 27,5 Gew.-% Acrylnitril und Maleinsäureanhydrid beinhalten.

Die DE 10 2005 055 080 A1 offenbart Verfahren zur Herstellung von Copolymeren aus Vinylaromaten, Vinylcyaniden und Dicarbonsäureanhydriden, bei denen durch die Anwesenheit einer bestimmten Wassermenge während der Polymerisation u.a. eine verbesserte Eigenfarbe der Copolymere erhalten werden kann. Die in den Beispielen dieser Schrift konkret offenbarten mathematischen Produkte aus den Gew.-% der sich von Acrylnitril und den Gew.-% der sich von Maleinsäureanhydrid ableitenden Struktureinheiten sind immer entweder kleiner als 40 Gew.-%² oder größer als 65 Gew.-%².

Bei nach diesen bekannten Verfahren herstellbaren Copolymeren aus vinylaromatischen Monomeren, Vinylcyaniden und Dicarbonsäureanhydriden tritt jedoch mit zunehmender Betriebszeit der Polymerisation neben einer möglichen Verschlechterung der Eigenfarbe auch ein Ansteigen des Schmutzpartikelgehalts auf. Dadurch wird zum einen die Qualität der Copolymere negativ beeinflußt, zum anderen sind vermehrt Reinigungen der Polymerisationsanlage nötig.

Der vorliegenden Erfindung lag daher die Aufgabe zugrunde, Copolymere auf Basis von vinylaromatischen Monomeren, Vinylcyaniden und Dicarbonsäureanhydriden zur Verfügung zu stellen, die auch nach längerer Betriebszeit der Polymerisation gegenüber bekannten Copolymeren dieser Art eine vergleichsweise gute Eigenfarbe und einen verringerten Schmutzpartikelgehalt aufweisen. Ebenso sollten geeignete Herstellverfahren für solche Copolymere zur Verfügung gestellt werden.

Demgemäß wurden die eingangs definierten Verfahren zur Herstellung der Copolymeren A) gefunden, wobei erfindungswesentlich ist, dass das mathematische Produkt aus den Gew.-% der sich von Komponente A2) und den Gew.-% der sich von Komponente A3) ableitenden Struktureinheiten des Copolymers A) im Bereich von 40 Gew.-%² bis 65 Gew.-%² liegt.

Des weiteren wurden Copolymere A) auf Basis von vinylaromatischen Monomeren, Vinylcyaniden und Dicarbonsäureanhydriden gefunden, thermoplastische Formmassen enthaltend diese Copolymere A), die Verwendungen dieser Copolymeren A) bzw. dieser thermoplastischen Formmassen, sowie Formkörper, Folien, Fasern und Schäume enthaltend diese Copolymeren A) bzw. diese thermoplastischen Formmassen.

Die erfindungsgemäßen Verfahren, Copolymere, thermoplastischen Formmassen, Verwendungen und Formkörper, Folien, Fasern und Schäume werden im folgenden beschrieben.

Zur Herstellung der schmutzpartikelarmen Copolymere A) enthaltend A1) ein oder mehrere vinylaromatische Monomere, A2) ein oder mehrere Vinylcyanide und A3) ein oder mehrere Dicarbonsäureanhydride sind grundsätzlich alle dem Fachmann bekannten und im Stand der Technik, beispielsweise in DE 100 58 302 A1 und den dort zitierten Dokumenten, beschriebenen Verfahren der Masse- oder Lösungspolymerisation geeignet. Erfindungswesentlich ist, daß die nach diesen Verfahren hergestellten Copolymere A) enthalten:
49,2 bis 93,2 Gew.-%, bevorzugt 58,5 bis 88,5 Gew.-%, besonders bevorzugt 66,3 bis 83,3 Gew.-%, sich von Komponente A1) ableitende Struktureinheiten,
6 bis 50 Gew.-%, bevorzugt 10 bis 40 Gew.-%, besonders bevorzugt 15 bis 32 Gew.-%, sich von Komponente A2) ableitende Struktureinheiten,
0,8 bis 7 Gew.-%, bevorzugt 1,5 bis 5 Gew.-%, besonders bevorzugt 1,7 bis 3,6 Gew.-%, sich von Komponente A3) ableitende Struktureinheiten und
0 bis 25 Gew.-%, bevorzugt 0 bis 15 Gew.-%, besonders bevorzugt 0 bis 10 Gew.-%, sich von Komponente A4) ableitende Struktureinheiten,
wobei die Gew.-% jeweils auf das Gesamtgewicht der sich von den Komponenten A1), A2), A3) und A4) ableitenden Struktureinheiten bezogen sind und zusammen 100 Gew.-% ergeben, und wobei
das mathematische Produkt aus den Gew.-% der sich von Komponente A2) und den Gew.-% der sich von Komponente A3) ableitenden Struktureinheiten des Copolymers A) im Bereich von 40 Gew.-%² bis 65 Gew.-%², bevorzugt im im Bereich von 50 Gew.-%² bis 60 Gew.-%², besonders bevorzugt im Bereich von 54 Gew.-%² bis 58 Gew.-%² liegt.

Als Komponente A1) kommen alle dem Fachmann bekannten und im Stand der Technik, beispielsweise DE 100 58 302 A1, beschriebenen vinylaromatischen Monomere in Betracht; bevorzugt werden Styrol, α-Methylstyrol, p-Methylstyrol, t-Butylstyrol, Vinylnaphthalin oder deren Mischungen eingesetzt; besonders bevorzugt wird Styrol eingesetzt.

Als Komponente A2) kommen alle dem Fachmann bekannten und im Stand der Technik, beispielsweise DE 25 40 517 A1, beschriebenen Vinylcyanide in Betracht; bevorzugt werden Acrylnitril, Methacrylnitril oder deren Mischungen eingesetzt; besonders bevorzugt wird Acrylnitril eingesetzt.

Als Komponente A3) kommen alle dem Fachmann bekannten und im Stand der Technik beschriebenen Dicarbonsäureanhydride in Betracht; bevorzugt werden Maleinsäureanhydrid, Methylmaleinsäureanhydrid, Itaconsäureanhydrid oder deren Mischungen eingesetzt; besonders bevorzugt wird Maleinsäureanhydrid eingesetzt.

Als Komponente A4) der erfindungsgemäßen Copolymere A) können weitere, mit den Komponenten A1), A2) und A3) copolymerisierbare und von diesen verschiedene Monomere eingesetzt werden.

Besonders bevorzugt sind die Copolymere A) Styrol-Acrylnitril-Maleinsäureanhydrid-Copolymere.

Die Herstellung der Copolymeren A) erfolgt durch Masse- oder Lösungspolymerisation, bevorzugt jedoch als Lösungspolymerisation in Anwesenheit eines organischen Lösungsmittels, beispielsweise Cyclohexan, Ethylbenzol, Toluol oder Dimethylsulfoxid, bevorzugt Ethylbenzol.

Sowohl bei der Lösungs- als auch bei der Massepolymerisation kann die Initiierung der Polymerisationsreaktion grundsätzlich durch Zugabe chemischer Polymerisationsinitiatoren erfolgen, wie beispielsweise in DE 100 58 302 A1 beschrieben; bevorzugt erfolgt die Initiierung aber rein thermisch, also ohne Zusatz eines Polymerisationsinitiators. Die Herstellung kann in einem Batch- oder Semibatch-Verfahren erfolgen, bevorzugt wird jedoch eine kontinuierliche Verfahrensführung durchgeführt.

In einer insbesondere bevorzugten Ausführungsform der erfindungsgemäßen Verfahren erfolgt die Verfahrensführung kontinuierlich unter stationären Bedingungen; unter stationären Bedingungen bedeutet: die Konzentrationen sämtlicher Reaktionsteilnehmer und die Zusammensetzung der gebildeten Copolymere A) bleiben über die Zeitdauer der Reaktion praktisch konstant (Angaben zum Zusammenhang zwischen Monomer- und Polymerzusammensetzung sowie zur stationären Reaktionsführung können insbesondere EP 0 001 625 A1 und DE 25 40 517 A1 entnommen werden).

Geeignete Verfahrensparameter, wie Druck, Temperatur, Verweilzeiten etc., geeignete Apparate zur Durchführung der Verfahren sowie geeignete Mengenstromdosierungen der Monomere, falls vorhanden der Lösungsmittel, falls vorhanden der Initiatoren und ggf. weiterer Polymerisationszusätze sind dem Fachmann bekannt und im Stand der Technik beschrieben.

Die Aufarbeitung der Polymerisationsmischung und die Isolierung der Copolymere A) kann nach dem Fachmann bekannten und im Stand der Technik beschriebenen Methoden erfolgen, beispielsweise durch Abtrennung niedermolekularer Verbindungen mittels Anlegen von Vakuum oder Strippen mit Inertgas.

Die nach den erfindungsgemäßen Verfahren hergestellten Copolymere A) unterscheiden sich aufgrund ihrer speziellen Monomerzusammensetzung von bekannten Copolymeren dieser Art dahingehend, dass sie auch nach längerer Betriebszeit der Polymerisation eine vergleichsweise gute Eigenfarbe und einen verringerten Schmutzpartikelgehalt aufweisen.

Die erfindungsgemäßen Copolymere A) können mit einem oder mehreren weiteren thermoplastischen Polymeren B), beispielsweise Styrol-Acrylnitril-Copolymeren (SAN) oder alpha-Methylstyrol-Acrylnitril-Copolymeren (AMSAN), Polyamid (PA), Polyestern wie Polybutylenterephthalat (PBT) oder Polyethylenterephthalat (PET), Poly(meth)acrylaten (PMMA) oder Polycarbonaten (PC), mit Kautschuken C), beispielsweise Polybutadien- oder Acrylatkautschuken, mit teilchen- oder faserförmigen Füll- oder Verstärkungsstoffen D), insbesondere Glasfasern, und/oder mit kunststoffüblichen Zusatzstoffen E), beispielsweise Wärme- oder UV-Stabilisatoren, Gleitmittel, Flammschutzmittel, Antistatika, Farbstoffe oder -pigmente etc, zu thermoplastischen Formmassen verarbeitet werden.

Bevorzugte thermoplastische Formmassen enthalten
1 bis 95 Gew.-% Copolymere A),
5 bis 99 Gew.-% eines oder mehrerer von Komponente A) verschiedener thermoplastischer Polymerer B),
0 bis 50 Gew.-% eines oder mehrerer Kautschuke C),
0 bis 70 Gew.-% eines oder mehrerer teilchen- oder faserförmiger Füll- oder Verstärkungsstoffe D) und
0 bis 25 Gew.-% eines oder mehrerer kunststoffüblicher Zusatzstoffe E),
wobei die Gew.-% jeweils auf das Gesamtgewicht der Komponenten A), B), C), D) und E) bezogen sind und zusammen 100 Gew.-% ergeben.

Die Komponenten B), C), D) und E) als solche sowie Verfahren zum Herstellen der thermoplastischen Formmassen aus den einzelnen Komponenten sind dem Fachmann bekannt und im Stand der Technik beschrieben.

Aus den erfindungsgemäßen Copolymeren A) und den thermoplastischen Formmassen enthaltend die Copolymere A) können nach dem Fachmann bekannten und im Stand der Technik beschriebenen Verfahren, beispielsweise durch Spritzgießen, Pressen, Kalandrieren oder durch Extrusion, Formkörper, Folien, Fasern und Schäume hergestellt werden.

Die erfindungsgemäßen Formkörper, Folien, Fasern und Schäume sind für alle dem Fachmann bekannten Anwendungsbereiche geeignet. Insbesondere eignen sie sich zur Verwendung als Haushaltsartikel, elektronische Bauteile, medizinisch-technische und Kfz-Bauteile.

Die erfindungsgemäßen Copolymere A) weisen auch nach längerer Betriebszeit der Polymerisation gegenüber bekannten Copolymeren dieser Art eine vergleichsweise gute Eigenfarbe und einen verringerten Schmutzpartikelgehalt auf.

Die Erfindung wird nachstehend anhand von Beispielen näher erläutert.

### Beispiele:

In den nachfolgenden erfindungsgemäßen Beispielen und den Vergleichsbeispielen wurden jeweils Copolymere hergestellt und deren Eigenschaften ermittelt.

### Einsatzstoffe:

Als Komponente A1-i wurde handelsübliches Styrol mit einer Reinheit > 99,8 Gew.-% verwendet.

Als Komponente A2-i wurde handelsübliches Acrylnitril verwendet.

Als Komponente A3-i wurde handelsübliches Maleinsäureanhydrid mit einer Reinheit > 99,8 Gew.-% verwendet.

Als Lösungsmittel für die Polymerisation wurde handelsübliches Ethylbenzol verwendet.

### Herstellung und Eigenschaften der Copolymere

In einen kontinuierlich betriebenen und im stationären Zustand befindlichen Rührkessel (40 I - Durchflusskessel), der mit Stickstoff gespült wurde, wurden jeweils pro Zeiteinheit solche Mengen der Komponenten A1), A2), A3) und des Lösungsmittels zudosiert, daß Copolymere erhalten wurden, die die jeweils in Tabelle 1 genannten Gewichtsanteile sich von den Komponenten A1), A2) und A3) ableitenden Struktureinheiten enthielten (Bestimmungsmethode: s. u.). Die Temperatur der Polymerisationsmischung betrug jeweils 145°C, die Polymerisationsinitiierung erfolgte jeweils rein thermisch. Gerechnet ab dem Zeitpunkt des Erreichens eines stationären Zustands der Polymerisation wurden nach den in Tabelle 1 genannten Betriebszeiten von den aus dem Rührkessel kontinuierlich abgezogenen Polymerisationsmischungen nach jeweils identischen zweistufigen Verfahren nicht-umgesetzte Monomere, Lösungsmittel und andere niedermolekulare Verbindungen abgetrennt. Die so erhaltenen Copolymere wurden jeweils granuliert, getrocknet und bzgl. ihrer in Tabelle 1 widergegebenen, Eigenschaften untersucht.

Die Gewichtsanteile der sich von den Komponenten A1), A2) und A3) ableitenden Strukturelemente der Copolymere sowie die Eigenschaften der Copolymere wurden wie folgt bestimmt:
Gewichtsanteile der sich von den Komponenten A1), A2) und A3) ableitenden Strukturelemente der Copolymere [Gew.-%]:
   Aus den wie beschrieben hergestellten Copolymergranulaten wurden durch Schmelzpressen Filme definierter Dicke hergestellt. Die Gewichtsanteile der sich von den Komponenten A1), A2) und A3) ableitenden Strukturelemente wurden mittels quantitativer IR-Spektroskopie an diesen Filmen bestimmt. Die Gew.-% beziehen sich jeweils auf das Gesamtgewicht der Copolymere und ergeben zusammen 100 Gew.-%.

### Viskositätszahl VZ [ml/g]:

Die Viskositätszahl VZ wurde bei 25°C anhand einer 0,5 gew.-%igen Lösung des jeweiligen Copolymeren in Dimethylformamid gemäß DIN 53726 bestimmt.

### Yellowness-Index YI [dimensionslos]:

Der Gelbindex (Gelbstich) oder Yellowness-index YI wurde gemäß ASTM D 1925 an spritzgegossenen Platten (Abmessungen: 60 mm x 60mm x 2 mm; Massetemperatur beim Spritzguss 240°C; Werkzeugtemperatur beim Spritzguss 60°C) bestimmt.

### Schmutzpartikelgehalt [mm² Schmutzpartikel/m²]:

An jeweils 2160 g Granulat wurden mittels eines Pelletscanners PS 25C der Fa. OCS die von der Copolymermatrix abweichenden Einschlüsse bzgl. ihrer Größe und Anzahl detektiert und daraus der Schmutzpartikelgehalt bestimmt.

Die Gewichtsanteile der sich von den Komponenten A1), A2) und A3) ableitenden Strukturelemente der Copolymere, das sich daraus ergebende mathematische Produkt aus den Gew.-% der sich von Komponente A2) und den Gew.-% der sich von Komponente A3) ableitenden Struktureinheiten sowie die Eigenschaften der Copolymere in Abhängigkeit von der Betriebszeit sind Tabelle 1 zu entnehmen.

**Tabelle 1: Zusammensetzung, Betriebszeiten der Polymerisation und Eigenschaften der Copolymere**

| Beispiel* | 1 | 2 | 3 | V-4 | V-5 | 6 | 7 |
|---|---|---|---|---|---|---|---|
| | | | | | | | |
| Gewichtsanteile der sich von den Komponenten A1), A2) und A3) ableitenden Strukturelemente der Copolymere ** | | | | | | | |
| A1-i [Gew.-%] | 72,5 | 68,4 | 68,4 | 68,0 | 67,2 | 81,2 | 80,4 |
| A2-i [Gew.-%] | 25,8 | 29,8 | 29,7 | 29,8 | 29,8 | 15,2 | 16,0 |
| A3-i [Gew.-%] | 1,7 | 1,8 | 1,9 | 2,2 | 3,0 | 3,6 | 3,6 |
| | | | | | | | |
| mathematisches Produkt aus Gew.-% der Komponenten A2) und A3) [Gew.-%²] ** | 43,9 | 53,6 | 56,4 | 65,6 | 89,4 | 54,7 | 57,6 |
| | | | | | | | |
| Eigenschaften | | | | | | | |
| Viskositätszahl VZ [ml/g] ** | 66 | 67 | 67 | 69 | 67 | 67 | 64 |
| Yellowness-Index YI [dimensionslos] ** | 9 | 13 | 15 | 16 | 21 | 10 | 8 |
| Schmutzpartikelgehalt [mm² Schmutzpartikel/m²] | | | | | | | |
| nach 24 h Betriebszeit | 2 | 5 | 5 | 21 | 43 | 4 | 6 |
| nach 72 h Betriebszeit | 3 | 10 | 11 | > 100 | > 100 | 6 | 9 |
| nach 144 h Betriebszeit | 5 | 12 | 12 | > 100 | > 100 | 7 | 10 |
| nach 288 h Betriebszeit | 6 | 14 | 12 | > 100 | > 100 | 9 | 12 |

| | | | | | | | |
|---|---|---|---|---|---|---|---|
| * mit "V" gekennzeichnete Beispiele sind Vergleichsbeispiele, ** diese Werte sind aufgrund der stationären Bedingungen unabhängig von der Betriebszeit | | | | | | | |

Die Beispiele belegen, daß die erfindungsgemäßen Copolymere A) auch nach längerer Betriebszeit der Polymerisation gegenüber bekannten Copolymeren dieser Art eine vergleichsweise gute Eigenfarbe und einen verringerten Schmutzpartikelgehalt aufweisen.

## Patentansprüche

1. Verfahren zur Herstellung von Copolymeren A) mit verringertem Schmutzpartikelgehalt, enthaltend
| | |
|---|---|
| 49,2 bis 93,2 Gew.-% | sich von einem oder mehreren vinylaromatischen Monomeren (Komponente A1)) ableitende Struktureinheiten, |
| 6 bis 50 Gew.-% | sich von einem oder mehreren Vinylcyaniden (Komponente A2)) ableitende Struktureinheiten, |
| 0,8 bis 7 Gew.-% | sich von einem oder mehreren Dicarbonsäureanhydriden (Komponente A3)) ableitende Struktureinheiten und |
| 0 bis 25 Gew.-% | sich von weiteren copolymerisierbaren und von A1), A2) und A3) verschiedenen Monomeren (Komponente A4)) ableitende Struktureinheiten, |
wobei die Gew.-% jeweils auf das Gesamtgewicht der sich von den Komponen-ten A1), A2), A3) und A4) ableitenden Struktureinheiten bezogen sind und zusammen 100 Gew.-% ergeben,
durch Masse- oder Lösungspolymerisation,
**dadurch gekennzeichnet, dass** das mathematische Produkt aus den Gew.-% der sich von Komponente A2) und den Gew.-% der sich von Komponente A3) ableitenden Struktureinheiten des Copolymers A) im Bereich von 40 Gew.-%² bis 65 Gew.-%² liegt.

2. Verfahren nach Anspruch 1, **dadurch gekennzeichnet, dass** die Polymerisation thermisch und ohne Zusatz eines Polymerisationsinitiators initiiert wird.

3. Verfahren nach Ansprüchen 1 bis 2, **dadurch gekennzeichnet, dass** die Polymerisation als Lösungspolymerisation in Anwesenheit eines organischen Lösungsmittels durchgeführt wird.

4. Verfahren nach Ansprüchen 1 bis 3, **dadurch gekennzeichnet, dass** Komponente A1) Styrol, α-Methylstyrol, p-Methylstyrol, t-Butylstyrol, Vinylnaphthalin oder ein Gemisch aus zwei oder mehr dieser Monomeren ist,
Komponente A2) Acrylnitril, Methacrylnitril oder ein Gemisch dieser Monomere ist und
Komponente A3) Maleinsäureanhydrid, Methylmaleinsäureanhydrid, Itaconsäureanhydrid oder ein Gemisch aus zwei oder mehr dieser Monomeren ist.

5. Verfahren nach Ansprüchen 1 bis 4, **dadurch gekennzeichnet, dass** das Copolymer A) ein Styrol-Acrylnitril-Maleinsäureanhydrid-Copolymer ist.

6. Copolymere A) mit verringertem Schmutzpartikelgehalt, herstellbar nach Verfahren gemäß einem der Ansprüche 1 bis 5.

7. Thermoplastische Formmassen enthaltend
1 bis 95 Gew.-% Copolymerer A) gemäß Anspruch 6,
5 bis 99 Gew.-% eines oder mehrerer von Komponente A) verschiedener thermoplastischer Polymerer B),
0 bis 50 Gew.-% eines oder mehrerer Kautschuke C),
0 bis 70 Gew.-% eines oder mehrerer teilchen- oder faserförmiger Füll- oder Verstärkungsstoffe D) und
0 bis 25 Gew.-% eines oder mehrerer kunststoffüblicher Zusatzstoffe E),
wobei die Gew.-% jeweils auf das Gesamtgewicht der Komponenten A), B), C), D) und E) bezogen sind und zusammen 100 Gew.-% ergeben.

8. Verwendung der Copolymere A) gemäß Anspruch 6 oder der thermoplastischen Formmassen gemäß Anspruch 7 zur Herstellung von Formkörpern, Folien, Fasern und Schäumen.

9. Formkörper, Folien, Fasern und Schäume erhältlich aus den Copolymere A) gemäß Anspruch 6 oder den thermoplastischen Formmassen gemäß Anspruch 7.

## Claims

1. A process for preparing copolymers A) with a reduced soil particle content, comprising
| | |
|---|---|
| 49.2 to 93.2% by weight | of structural units which derive from one or more vinylaromatic monomers (component A1)), |
| 6 to 50% by weight | of structural units which derive from one or more vinyl cyanides (component A2)), |
| 0.8 to 7% by weight | of structural units which derive from one or more dicarboxylic anhydrides (component A3)) and |
| 0 to 25% by weight | of structural units which derive from further copolymerizable monomers other than A1), A2) and A3) (component A4)), |
where the percentages by weight are each based on the total weight of the structural units which derive from components A1), A2), A3) and A4), and together add up to 100% by weight,
by bulk or solution polymerization,
wherein the mathematical product of the percentages by weight of the structural units which derive from component A2) and the percentages by weight of the structural units which derive from component A3) in the copolymer A) is in the range from 40%² by weight to 65%² by weight.

2. The process according to claim 1, wherein the polymerization is initiated thermally and without addition of a polymerization initiator.

3. The process according to claim 1 or 2, wherein the polymerization is performed as a solution polymerization in the presence of an organic solvent.

4. The process according to claims 1 to 3, wherein component A1) is styrene, α-methylstyrene, p-methylstyrene, t-butylstyrene, vinylnaphthalene or a mixture of two or more of these monomers,
component A2) is acrylonitrile, methacrylonitrile or a mixture of these monomers and
component A3) is maleic anhydride, methylmaleic anhydride, itaconic anhydride or a mixture of two or more of these monomers.

5. The process according to claims 1 to 4, wherein the copolymer A) is a styrene-acrylonitrile-maleic anhydride copolymer.

6. A copolymer A) with reduced soil particle content, preparable by processes according to any of claims 1 to 5.

7. A thermoplastic molding material comprising
1 to 95% by weight of copolymers A) according to claim 6,
5 to 99% by weight of one or more thermoplastic polymers B) other than component A),
0 to 50% by weight of one or more rubbers C),
0 to 70% by weight of one or more particulate or fibrous fillers or reinforcers D) and
0 to 25% by weight of one or more additives E) customary in plastics,
where the percentages by weight are each based on the total weight of components A), B), C), D) and E), and together add up to 100% by weight.

8. The use of the copolymers A) according to claim 6 or of the thermoplastic molding materials according to claim 7 for producing moldings, films, fibers and foams.

9. A molding, film, fiber or foam obtainable from the copolymers A) according to claim 6 or the thermoplastic molding materials according to claim 7.

## Revendications

1. Procédé de fabrication de copolymères A) présentant une teneur réduite en particules de saleté, contenant
49,2 à 93,2 % en poids d'unités structurales dérivant d'un ou de plusieurs monomères aromatiques de vinyle (composant A1)),
6 à 50 % en poids d'unités structurales dérivant d'un ou de plusieurs cyanures de vinyle (composant A2)),
0,8 à 7 % en poids d'unités structurales dérivant d'un ou de plusieurs anhydrides d'acides dicarboxyliques (composant A3)), et
0 à 25 % en poids d'unités structurales dérivant d'autres monomères copolymérisables et différents de A1), A2) et A3) (composant A4)),
les % en poids se rapportant à chaque fois au poids total des unités structurales dérivant des composants A1), A2), A3) et A4) et leur somme étant de 100 % en poids,
par polymérisation en masse ou en solution,
**caractérisé en ce que** le produit mathématique du % en poids des unités structurales dérivant du composant A2) et du % en poids des unités structurales dérivant du composant A3) du copolymère A) se situe dans la plage allant de 40 % en poids² à 65 % en poids².

2. Procédé selon la revendication 1, **caractérisé en ce que** la polymérisation est initiée thermiquement et sans ajout d'un initiateur de polymérisation.

3. Procédé selon les revendications 1 à 2, **caractérisé en ce que** la polymérisation est réalisée sous la forme d'une polymérisation en solution en présence d'un solvant organique.

4. Procédé selon les revendications 1 à 3, **caractérisé en ce que** le composant A1) est le styrène, l'α-méthylstyrène, le p-méthylstyrène, le t-butylstyrène, la vinylnaphtaline ou un mélange de deux ou plus de ces monomères,
le composant A2) est l'acrylonitrile, le méthacrylonitrile ou un mélange de ces monomères, et
le composant A3) est l'anhydride de l'acide maléique, l'anhydride de l'acide méthylmaléique, l'anhydride de l'acide itaconique ou un mélange de deux ou plus de ces monomères.

5. Procédé selon les revendications 1 à 4, **caractérisé en ce que** le copolymère A) est un copolymère de styrène-acrylonitrile-anhydride de l'acide maléique.

6. Copolymères A) présentant une teneur réduite en particules de saleté, pouvant être fabriqué par un procédé selon l'une quelconque des revendications 1 à 5.

7. Matériaux de moulage thermoplastiques, contenant 1 à 95 % en poids de copolymères A) selon la revendication 6,
5 à 99 % en poids d'un ou de plusieurs polymères thermoplastiques B) différents du composant A),
0 à 50 % en poids d'un ou de plusieurs caoutchoucs C), 0 à 70 % en poids d'une ou de plusieurs charges ou matières renforçantes particulaires ou fibreuses D), et
0 à 25 % en poids d'un ou de plusieurs additifs usuels pour les plastiques E),
les % en poids se rapportant à chaque fois au poids total des composants A), B), C), D) et E) et leur somme étant de 100 % en poids.

8. Utilisation des copolymères A) selon la revendication 6 ou des matériaux de moulage thermoplastiques selon la revendication 7 pour la fabrication de corps moulés, de films, de fibres et de mousses.

9. Corps moulés, films, fibres et mousses pouvant être obtenus à partir des copolymères A) selon la revendication 6 ou des matériaux de moulage thermoplastiques selon la revendication 7.
